# EUROPÄISCHE PATENTSCHRIFT

(11) **EP 2 988 956 B1**
(45) Veröffentlichungstag und Bekanntmachung des Hinweises auf die Patenterteilung: **15.01.2020**
(21) Anmeldenummer: 14703316.1
(22) Anmeldetag: 03.02.2014
(51) Int. Cl.: B60C 19/08, B60C 15/00, B60C 15/06, B60C 9/02, B29D 30/08

(54) **FAHRZEUGLUFTREIFEN UND VERFAHREN ZUR HERSTELLUNG EINES FAHRZEUGLUFTREIFENS**
VEHICLE PNEUMATIC TIRE AND METHOD FOR MANUFACTURING A VEHICLE PNEUMATIC TIRE
PNEUMATIQUE D'AVION ET PROCÉDÉ DE FABRICATION D'UN PNEUMATIQUE D'AVION

(30) Priorität: 24.04.2013 DE 102013104114
(43) Veröffentlichungstag der Anmeldung: 02.03.2016
(73) Patentinhaber: Continental Reifen Deutschland GmbH, 30165 Hannover (DE)
(72) Erfinder: FRERICHS, Udo, 30855 Langenhagen (DE)
(74) Vertreter: Finger, Karsten
(86) Internationale Anmeldenummer: PCT/EP2014/051987
(87) Internationale Veröffentlichungsnummer: WO 2014/173551

(56) Entgegenhaltungen:
- EP-A1- 0 847 880
- EP-A1- 2 933 122
- GB-A- 544 757

## Beschreibung

Die Erfindung betrifft einen Fahrzeugluftreifen in Radialbauart, aufweisend einen Oberbau, eine Radialkarkasse und zwei Reifenwülste aufweisend jeweils eine Wulstsohle, wobei sich die Radialkarkasse von einer Wulstsohle über den Oberbau zu der anderen Wulstsohle erstreckt, wobei der Oberbau und wenigstens eine Wulstsohle elektrisch leitfähig gestaltet sind, wobei die Radialkarkasse elektrisch nicht leitfähig gestaltet ist und wenigstens eine Karkasslage aufweist, welche aus einer in eine elektrisch nicht leitfähige Kautschukmischung eingebetteten Festigkeitsträgern besteht und deren Oberfläche eine Auflage aus elektrisch leitfähigem Material aufweist. Weiter betrifft die Erfindung ein Verfahren zur Herstellung eines solchen Fahrzeugluftreifens.

Fahrzeuge können sich während des Fahrbetriebes elektrisch aufladen. Um Entladungsvorgänge zu vermeiden, ist für eine ausreichende Ableitung der elektrostatischen Ladungen Sorge zu tragen. Um die elektrostatische Ladung ableiten zu können, sind Reifenbauteile elektrisch leitfähig gestaltet, so dass ein elektrisch leitfähiger Pfad von der Kontaktfläche des Fahrzeugluftreifens mit der Fahrbahn zum Kontaktbereich des Fahrzeugluftreifens zur Reifenfelge vorliegt. Dies kann beispielsweise durch die Verwendung elektrisch leitfähiger Kautschukmischungen erfolgen.

Nun geht die Entwicklung dahin, den Rollwiderstand des Reifens zu reduzieren. Ein Ansatz, den Rollwiderstand zu reduzieren, ist der Einsatz rollwiderstandsarmer Kautschukmischungen. Die Hysterese dieser rollwiderstandsarmen Kautschukmischungen lässt sich vor allem durch den Einsatz niedriger aktiver Füllstoffe, geringerer Mengen an Füllstoff oder durch den Austausch von Ruß durch Silika verringern. Der Einsatz dieser rollwiderstandsarmen Kautschukmischungen führt jedoch zu einer Erhöhung des elektrischen Widerstandes dieser Kautschukmischungen, so dass die elektrische Leitfähigkeit sinkt. Der geforderte elektrische Widerstand des Gesamtreifens von höchstens 1 x 10 ⁸ Ω zur Ableitung der elektrostatischen Ladung kann nicht sichergestellt werden.

Als elektrisch leitfähiges Material ist ein Material zu verstehen, dessen elektrische Leitfähigkeit so hoch ist, dass der Reifen einen elektrischen Widerstand von höchstens 1x10⁸ Ω aufweist. Als elektrisch nicht leitfähige Kautschukmischung ist eine Kautschukmischung zu verstehen, mit der der Reifen einen elektrischen Widerstand größer als 1x10⁸ Ω aufweist.

Oftmals werden zur Abhilfe sogenannte leitfähige Russe in geringsten Konzentrationen verwendet. Diese haben allerdings eine verstärkende/versteifende Wirkung und wirken sich auch negativ auf das Hystereseverhalten und somit den Rollwiderstand aus. Zudem ist eine solche Maßnahme basierend auf leitfähigen Russen teuer. Die Entwicklung geht somit dahin, den Einsatz an elektrisch leitfähiger Kautschukmischung im Fahrzeugluftreifen zu reduzieren.

Aus der DE 10 2010 017 444 A1 ist ein Fahrzeugluftreifen mit einer Karkasse bekannt, wobei auf zumindest einer der beiden Oberflächen der Karkasse fadenförmige Elemente angeordnet sind, welche elektrisch leitfähig gestaltet sind, wodurch die elektrische Leitfähigkeit des Fahrzeugluftreifens verbessert ist. Hierzu werden nach der Herstellung des Bauteils Karkasse in einem Kalander die fadenförmigen Elemente auf zumindest eine Oberfläche der Karkasse aufgebracht. Problematisch ist hierbei, dass die Karkasse während der Reifenherstellung starken Beanspruchungen ausgesetzt ist. Ist beispielsweise die Dehnbarkeit der fadenförmigen Elemente nicht hoch genug, so ist eine zuverlässige Ableitung der elektrostatischen Ladung nicht gewährleistet, da die fadenförmigen Elemente reißen und der elektrisch leitfähige Pfad unterbrochen ist. Bei der Verwendung von anderen Materialien als Kautschuk im Fahrzeugluftreifen muss zudem Sorge getragen werden, dass die Anbindung an die Gummimatrix gewährleistet ist. Hierfür sind oftmals zusätzliche Präparationsschritte nötig. Dies steigert den Aufwand und die Komplexität des Herstellungsprozesses.

Aus der EP 0 847 880 A1 ist ein Fahrzeugluftreifen in Radialbauart mit einem die Felge kontaktierenden elektrisch leitfähigen Wulstband und einem elektrisch leitfähigen Oberbau bekannt. Das Wulstband und der Oberbau sind mittels einer elektrisch leitfähigen Karkasslage oder einer elektrisch leitfähige Seitenwand elektrisch leitend miteinander verbunden. Aus der GB 544 757 A ist ein Diagonalreifen bekannt, wobei der Laufstreifen und die Seitenwände sowie die Diagonalkarkasse elektrisch nicht leitfähig sein können. An der Außenseite der Seitenwand und/oder an der Innenseite der innersten Karkasslage und/oder an der Außenseite der äußersten Karkasslage ist eine elektrisch leitfähige Kautschukmischungssuspension aufgebracht. Die derart gebildeten elektrisch leitfähigen Passagen müssen von einer Stelle, bei welcher sie unmittelbar die Felge kontaktieren, bis zum und durch den Laufstreifen hindurch verlaufen. Aus der EP 2 933 122 A1 ist ein Fahrzeugluftreifen bekannt, der ein leitfähiges Garn aufweist, das sich zwischen den zwei Reifenwülsten entlang eines Gummierungskautschuks der Karkasslage erstreckt und einen elektrisch leitfähigen Oberbau kontaktiert.

Der Erfindung liegt die Aufgabe zugrunde, einen Fahrzeugluftreifen bereitzustellen, der mit einfachen Maßnahmen und geringem konstruktivem Aufbau die elektrische Leitfähigkeit des Fahrzeugluftreifens zuverlässig gewährleistet. Der Erfindung liegt weiter die Aufgabe zugrunde, ein Verfahren bereitzustellen, mittels dessen ein solcher Fahrzeugluftreifen auf einfache Art und Weise hergestellt werden kann. Gelöst wird die gestellte Aufgabe in Bezug auf den Fahrzeugluftreifen, indem die Auflage eine elektrisch leitfähige Kautschukmischung ist, indem sich die Karkasslage von der elektrisch leitfähigen Wulstsohle bis zum Oberbau erstreckt, wobei die beauflagte Oberfläche der Karkasslage den Oberbau und die elektrisch leitfähige Wulstsohle kontaktiert, indem sich die Auflage auf der Oberfläche der Karkasslage zusammenhängend von der elektrisch leitfähigen Wulstsohle bis zum Oberbau erstreckt und indem die Auflage sowohl die elektrisch leitfähige Wulstsohle als auch den Oberbau elektrisch kontaktiert, womit die elektrisch leitfähige Wulstsohle und der Oberbau elektrisch leitfähig miteinander verbunden sind.

Der elektrisch leitfähige Oberbau stellt hierbei eine leitfähige Verbindung zwischen der mit der Fahrbahnoberfläche in Kontakt tretenden Reifenoberfläche und der Auflage der Karkasslage her. Der Begriff "Oberbau" meint insbesondere die Bauteile Laufstreifen, Gürtel und Zwischenschichten zwischen den vorgenannten Bauteilen. Die Wulstsohle ist ein Bereich des Wulstes, der die Radialkarkasse und die Kontaktfläche zur Reifenfelge miteinander verbindet. Die elektrisch leitfähige Wulstsohle stellt eine leitfähige Verbindung zwischen der Auflage der Karkasslage und der Kontaktfläche des Fahrzeugluftreifens zur Reifenfelge her. Die Karkasslage weist in ihrer flächigen Erstreckung zwei flächige Außenflächen auf, welche jeweils eine Oberfläche der Karkasslage bilden.

Ein Vorteil besteht darin, dass durch die einfache Maßnahme der Beauflagung einer Karkasslage die elektrische Leitfähigkeit des Fahrzeugluftreifens zuverlässig gewährleistet ist. Es ist sichergestellt, dass die Ableitung der elektrostatischen Ladung von der Reifenfelge über den Fahrzeugluftreifen zur Fahrbahn zuverlässig erfolgen kann.

Vorteilhaft ist außerdem, dass sich der beauflagte Bereich der Karkasslage im Fahrzeugluftreifen dergestalt erstreckt, dass die Auflage die elektrisch leitfähige Wulstsohle und den elektrisch leitfähigen Oberbau kontaktiert und somit ein elektrisch leitfähiger Pfad von der mit der Fahrbahnoberfläche in Kontakt tretenden Reifenoberfläche bis zur Kontaktfläche mit der Reifenfelge hergestellt ist.

Kautschukmischungen sind bezüglich der Anforderungen in der Herstellung sowie im Betrieb von Fahrzeugluftreifen vielfach erprobt. Kritische Erfordernisse wie beispielsweise eine ausreichende Dehnbarkeit sind somit erfüllt. Die Auflage aus einer elektrisch leitfähigen Kautschukmischung gewährleistet einen zuverlässigen elektrisch leitfähigen Pfad vom Oberbau zur elektrisch leitfähigen Wulstsohle.

Von Vorteil ist weiter, dass sich die Auflage entlang einer Karkasslage erstreckt und im Aufbau des Reifens als Teil dieser Karkasslage angesehen werden kann. Der Fahrzeugluftreifen weist somit kein zusätzliches Bauteil auf und es muss keine aufwändige konstruktive Maßnahme am Reifen erfolgen.

Es wird somit ein Fahrzeugluftreifen bereitgestellt, der mit einfachen Maßnahmen und einfachem konstruktivem Aufbau die elektrische Leitfähigkeit des Fahrzeugluftreifens zuverlässig gewährleistet. Die elektrostatische Ladung kann zuverlässig vom Fahrzeug zur Fahrbahn hin abgeleitet werden.

Ein weiterer Vorteil besteht darin, dass die anderen Schichten der Seitenwand, wie beispielsweise die Innenschicht, die Karkasse und / oder der Seitenstreifen, aus elektrisch nicht leitfähigem Material gebildet sein und beispielsweise bezüglich des Rollwiderstands optimiert sein können. Auch der Einsatz von anderen elektrisch leitfähigen Materialien wie Metall kann somit vermieden werden. Der Einsatz dieser Materialen ist oft aufwändig, da z.B. die Adhäsion zur Kautschukmischung sichergestellt werden muss.

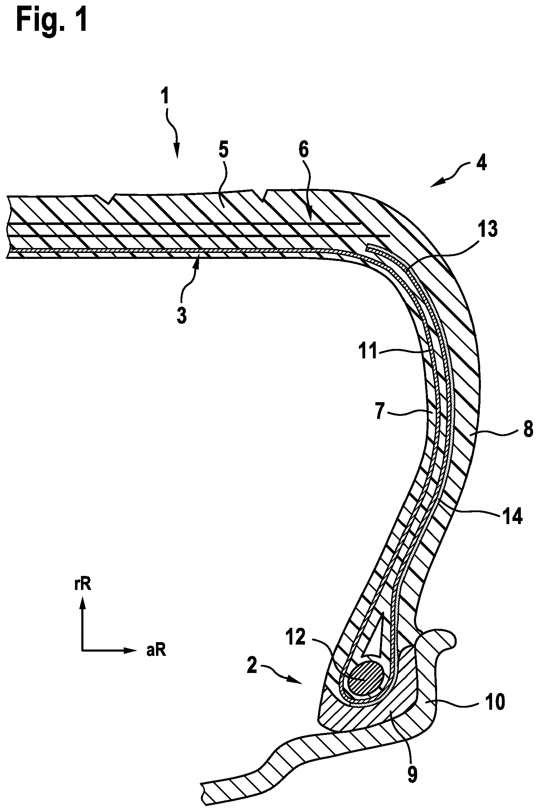

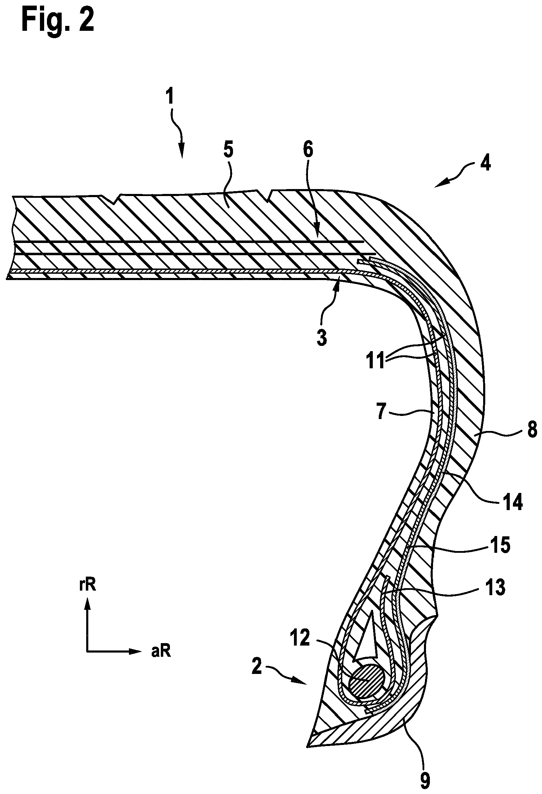

Es ist zweckmäßig, wenn sich die Auflage zwischen dem Oberbau und der elektrisch leitfähigen Wulstsohle axial außenseitig bezüglich der Karkasse erstreckt. Hierdurch kann bei einer Karkasse, welche eine C-Karkasslage oder eine schwimmende Karkasslage aufweist, zuverlässig und auf einfache Art und Weise die elektrische Leitfähigkeit des Reifens erreicht werden. Die C-Karkasslage wird von axial innen nach axial außen um den Wulstkern herumgeführt und endet axial außen in einem Karkasshochschlag, welcher sich bis zum Oberbau erstreckt. Die schwimmende Karkasslage erstreckt sich zwischen einer Wulstsohle und dem Oberbau als axial äußerste Lage der Karkasse. Sie endet im Bereich des Wulstes und im Bereich des Oberbaus. Die axial äußere Oberfläche des Karkasshochschlags bzw. der schwimmenden Karkasslage weist hierbei die zusammenhängende Auflage auf, welche sowohl den Oberbau als auch die elektrisch leitfähige Wulstsohle kontaktiert. Ein Ausführungsbeispiel für eine beauflagte C-Karkasslage bzw. für eine beauflagte schwimmende ist in Fig. 1 bzw. Fig. 2 dargestellt.

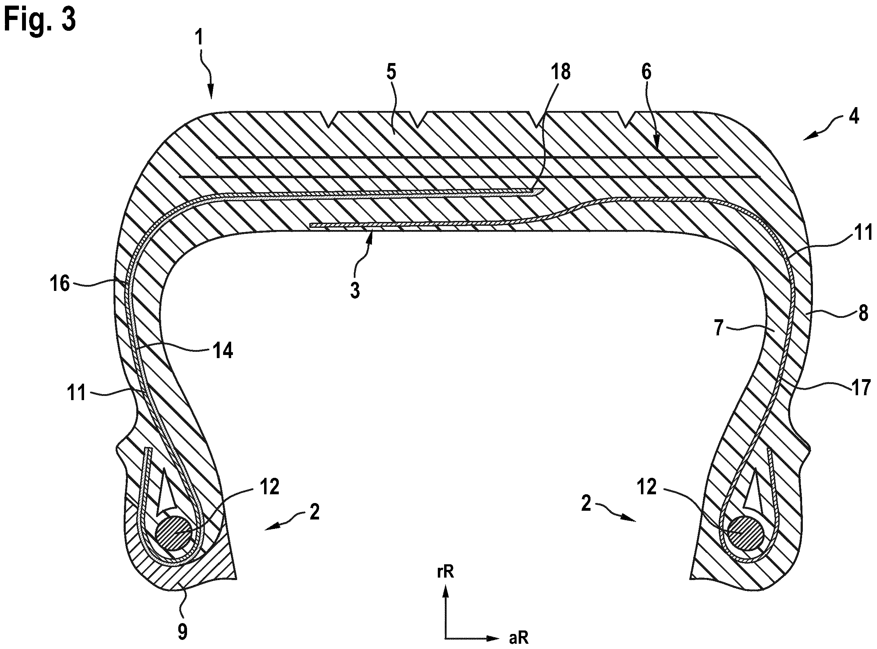

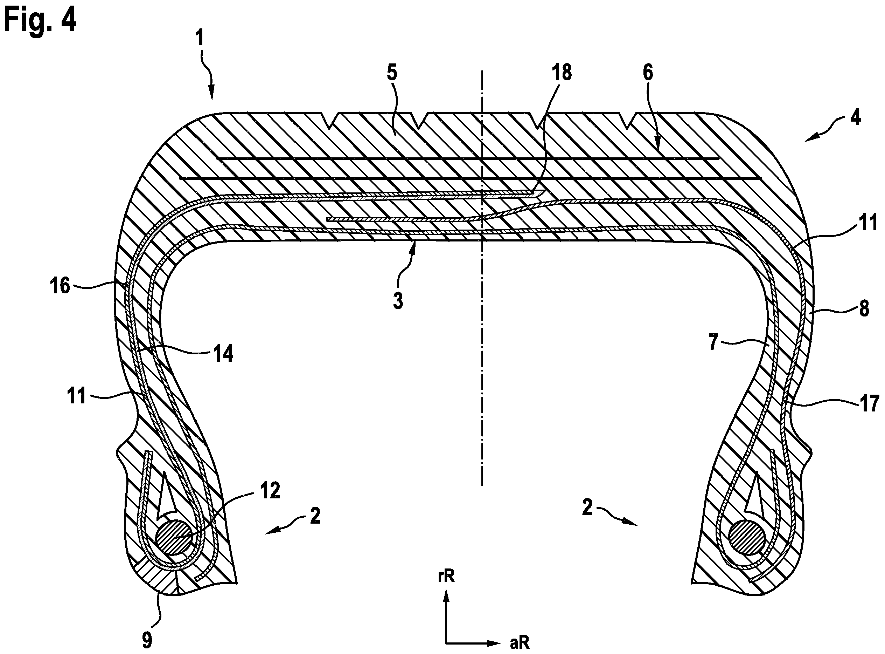

Zweckmäßig ist es weiter, wenn die Karkasslage im Bereich des Oberbaus endet und den Oberbau zumindest in ihrem Endpunkt kontaktiert, wenn sich die Auflage zwischen der elektrisch leitfähigen Wulstsohle und dem Oberbau axial innen an der Karkasslage erstreckt und wenn sich die Auflage im Bereich des Oberbaus bis zum Endpunkt der Karkasslage oder darüber hinaus erstreckt und den Oberbau als auch die elektrisch leitfähige Wulstsohle kontaktiert. Der Endpunkt der Karkasslage im Bereich des Oberbaus wird hierbei als zugehörig zu beiden Oberflächen der Karkasslage betrachtet. Hierdurch kann bei einer geteilten Karkasslage zuverlässig und auf einfache Art und Weise die elektrische Leitfähigkeit des Reifens erreicht werden. Die geteilte Karkasslage erstreckt sich hierbei von einem Reifenwulst über den Oberbau zum anderen Reifenwulst und ist im Bereich des Oberbaus in Umfangsrichtung geteilt. Die beiden Karkasslagenteile können sich im Bereich des Oberbaus überlappen. Die beauflagte Karkasslage kann ein Karkasslagenteil einer geteilten Karkasslage sein. Zwei Ausführungsbeispiele für eine geteilte Karkasslage mit je einem beauflagtem Karkasslagenteil sind in Fig. 3 und Fig. 4 dargestellt.

Es ist zweckmäßig, wenn sich die Auflage über den gesamten Umfang oder über mindestens einen Teilbereich des Umfangs des Fahrzeugluftreifens erstreckt. Hierbei kann es sich insbesondere um einen oder mehrere Streifen, insbesondere um 3 bis 30 Streifen, insbesondere um 4 bis 20 Streifen, insbesondere um 5 bis 10 Streifen aus einer elektrisch leitfähigen Kautschukmischung handeln, die jeweils die elektrisch leitfähige Wulstsohle sowie den Oberbau zusammenhängend kontaktieren und über den Umfang des Reifens verteilt angeordnet sind. Hierdurch kann bei reduzierter Menge an Kautschuk eine zuverlässige Ableitung der elektrischen Ladung erreicht werden. Insbesondere können die Streifen äquidistant angeordnet sein. Hierdurch kann eine über den Umfang des Fahrzeugluftreifens gleichmäßige Massenverteilung erreicht werden.

Weiter ist es zweckmäßig, wenn sich die Auflage über die gesamte Länge der Karkasslage oder über mindestens einen Teilbereich der Länge erstreckt. Die Länge der Karkasslage ist hierbei die Erstreckungslänge von einem zum anderen Ende der Karkasslage entlang der Karkasslage senkrecht zur Umfangsrichtung des Fahrzeugluftreifens. Durch eine Beauflagung der gesamten Länge der Karkasslage kann eine noch nicht abgelängte Karkasslage auf einfache Art und Weise für unterschiedliche Reifenkonstruktionen eingesetzt werden und die Komplexität der Herstellung verringert sich. Durch eine Auflage, die sich nur über einen Teilbereich der Länge der Karkasse erstreckt, kann die Menge an elektrisch leitfähiger Kautschukmischung minimiert werden.

Es ist zweckmäßig, wenn die Dicke der Auflage 0,005 mm bis 6,0 mm, insbesondere 0,01 mm bis 2,5 mm, insbesondere 0,05 mm bis 1,2 mm, beträgt. Die Auflage ist somit dünn ausführbar, insbesondere dünner als andere Schichten des Seitenbereiches eines Fahrzeugluftreifens, wie beispielsweise Karkasse, Innenschicht oder Seitenstreifen. Durch die Sicherstellung der elektrischen Leitfähigkeit durch die Auflage aus einer elektrisch leitfähigen Kautschukmischung kann somit die Menge an elektrisch leitfähiger Kautschukmischung im Seitenbereich des Fahrzeugluftreifens gering gehalten werden.

Vorteilhaft ist es, wenn beide Reifenwulste eine elektrisch leitfähige Wulstsohle aufweisen und beide elektrisch leitfähigen Wulstsohlen durch eine Auflage elektrisch leitfähig mit dem Oberbau verbunden sind. Hierbei kann es sich auch um eine Auflage handeln, die sich von einer Wulstsohle über den Oberbau zur anderen Wulstsohle erstreckt.

Das Verfahren zur Herstellung eines solchen Fahrzeugluftreifens erfolgt mit folgenden Schritten:
a) Herstellen der Karkasslage,
b) Belegen einer Oberfläche der Karkasslage mit einer zusammenhängenden Auflage aus einer elektrisch leitfähigen Kautschukmischung, wobei die Auflage im fertiggestellten Fahrzeugluftreifen eine elektrisch leitfähige Wulstsohle und den elektrisch leitfähigen Oberbau kontaktiert,
c) Anordnen der Karkasslage mit der Auflage auf einer Aufbautrommel,
d) Fertigstellen der Karkasse,
e) Fertigstellen des Fahrzeugluftreifens mit weiteren Schritten.

Hierdurch ist ein Verfahren bereitgestellt, mittels dessen auf einfache Art und Weise ein Fahrzeugreifen hergestellt werden kann, der mit einfachen Maßnahmen und einfachem konstruktivem Aufbau die elektrische Leitfähigkeit des Fahrzeugluftreifens zuverlässig gewährleistet.

Von Vorteil ist hierbei, dass durch nur einen Herstellungsschritt, Schritt b), die elektrische Leitfähigkeit des Fahrzeugluftreifens zwischen der elektrisch leitfähigen Wulstsohle und dem Oberbau gewährleistet ist. Bedeutend ist weiter, dass dieser Schritt nur die Herstellung der Karkasslage betrifft. Alle weiteren Herstellungsschritte, insbesondere die Konfektionierung des Fahrzeugluftreifens sowie dessen konstruktiver Aufbau, sind unverändert.

Ein weiterer Vorteil besteht darin, dass die anderen Schichten der Seitenwand, wie beispielsweise die Innenschicht, die Karkasse und / oder der Seitenstreifen, aus elektrisch nicht leitfähigem Material gebildet sein und beispielsweise bezüglich des Rollwiderstands optimiert sein.

Die Karkasslage ist eine Festigkeitsträgerlage des Fahrzeugluftreifens. Die Herstellung der Karkasslage in Schritt a) erfolgt insbesondere durch Kalandrieren, wobei Festigkeitsträger in eine Kautschukmischung eingebettet werden. Die Festigkeitsträger erstrecken sich hierbei in Längserstreckung der Karkasslage, das heisst in Fertigungsrichtung des Kalanders. Im fertiggestellten Fahrzeugluftreifen verlaufen die Festigkeitsträger der Karkasse üblicherweise quer zur Umfangsrichtung.

Es ist zweckmäßig, wenn das Belegen der Karkasslage mit der Auflage bei Schritt b) direkt am und/oder nach dem Kalander erfolgt. Hierdurch kann dieser Herstellungsschritt auf einfache Weise, insbesondere vollautomatisiert, erfolgen.

Weiter ist es zweckmäßig, wenn bei Schritt b) die Karkasslage über ihre gesamte Breite oder über mindestens einen Teil ihrer Breite mit der Auflage belegt wird. Die Breite der Karkasslage ist hierbei die Erstreckung quer zur Längserstreckungsrichtung der Festigkeitsträger der Karkasslage. Insbesondere können ein oder mehrere Streifen, insbesondere 3 bis 30 Streifen, insbesondere 4 bis 20 Streifen, insbesondere 5 bis 10 Streifen, aus einer elektrisch leitfähigen Kautschukmischung beabstanded aufgebracht werden. Hierdurch kann durch eine einfache Maßnahme die Menge an eingesetzter elektrisch leitfähiger Kautschukmischung reduziert werden und gleichzeitig die zuverlässige Ableitung der elektrostatischen Ladung am fertiggestellten Fahrzeugluftreifen gewährleistet sein. Insbesondere können die Streifen äquidistant angeordnet sein. Hierdurch wird eine gleichmäßige Massenverteilung erreicht.

Es ist zweckmäßig, wenn bei Schritt b) die Karkasslage über ihre gesamte Längserstreckung oder über mindestens einen Teilbereich ihrer Längserstreckung mit der Auflage belegt wird. Durch eine Belegung über die gesamte Längserstreckung ist ein kontinuierlicher Belegungsprozess möglich und die Karkasslage kann durch unterschiedliche Ablängung sehr einfach für unterschiedliche Fahrzeugluftreifen zur Verfügung gestellt werden. Durch die gezielte Belegung von Teilbereichen der Längserstreckung kann die eingesetzte Menge an elektrisch leitfähiger Kautschukmischung minimiert werden.

Mit einem solchen Verfahren kann auf einfache Art und Weise ein Fahrzeugluftreifen hergestellt werden, dessen elektrische Leitfähigkeit durch die Belegung einer C-Karkasslage, einer schwimmenden Karkasslage oder einer geteilten Karkasslage mit einer Auflage aus einer elektrisch leitfähigen Kautschukmischung zuverlässig sichergestellt ist.

Die Erfindung betrifft ferner einen Fahrzeugluftreifen, welcher nach dem erfindungsgemäßen Verfahren hergestellt ist.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 die rechte Seite eines radialen Teilschnitts durch eine Reifenfelge und einen erfindungsgemäßen Fahrzeugluftreifen mit einer Karkasse aufweisend eine C-Karkasslage;
Fig. 2 die rechte Seite eines radialen Teilschnitts durch einen erfindungsgemäßen Fahrzeugluftreifen mit einer Karkasse aufweisend eine schwimmende Karkasslage;
Fig. 3 und Fig. 4 jeweils einen radialen Teilschnitt durch einen erfindungsgemäßen Fahrzeugluftreifen mit einer Karkasse aufweisend eine geteilte Karkasslage.

Figur 1 zeigt die rechte Seite eines radialen Teilschnitts durch einen PKW-Fahrzeugluftreifen. Der aus Kautschukmischungen bestehende Fahrzeugluftreifen 1 beinhaltet eine sich von dem rechten Reifenwulst 2 zu dem nicht dargestellten linken Reifenwulst erstreckende Radialkarkasse 3. Der Fahrzeugluftreifen 1 weist einen Oberbau 4 auf, der einen Laufstreifen 5 und einen zwischen Laufstreifen 5 und Karkasse 3 angeordneten Gürtel 6 aufweist. Der Oberbau 4, oder zumindest ein Teil davon, ist elektrisch leitfähig gestaltet und stellt eine elektrisch leitfähige Verbindung zwischen der mit der Fahrbahnoberfläche in Kontakt tretenden Oberfläche des Laufstreifens 5 und der Karkasse 3 her. Der dargestellte Reifenwulst 2 umfasst eine elektrisch leitfähige Wulstsohle 9, welche sich zwischen Karkasse 3 und der Kontaktfläche zur Reifenfelge 10 erstreckt. Der Fahrzeugluftreifen 1 weist weiter an die Karkasse 3 angrenzende Bauteile wie die Innenschicht 7 und den Seitenstreifen 8 auf, welche im Seitenbereich des Fahrzeugluftreifens axial innen bzw. axial außen an die Karkasse 3 angrenzen.

Die Karkasse 3 weist eine Karkasslage 11 auf, welche aus einer in eine elektrisch nicht leitfähige Kautschukmischung eingebetteten Einlage aus Festigkeitsträgern besteht. Es handelt sich hierbei um eine sogenannte C-Karkasslage, welche von axial innen nach axial außen um zugfeste Wulstkerne 12 herumgeführt ist und axial außen in einem Karkasshochschlag 13, welcher sich bis zum Oberbau 4 erstreckt, endet. Die axial äußere Oberfläche des Karkasshochschlags 13 weist dabei eine Auflage 14 aus einer elektrisch leitfähigen Kautschukmischung auf, welche sich zusammenhängend von der elektrisch leitfähigen Wulstsohle 9 bis zum Oberbau 4 erstreckt und sowohl die elektrisch leitfähige Wulstsohle 9 als auch den Oberbau 4 kontaktiert, womit die elektrisch leitfähige Wulstsohle 9 und der Oberbau 4 elektrisch leitfähig miteinander verbunden sind. Die elektrisch leitfähige Wulstsohle 9 weist elektrisch leitfähiges Material auf und stellt eine leitfähige Verbindung zwischen der Auflage 14 und der Kontaktfläche des Fahrzeugluftreifens zur Reifenfelge 10 her. Der Fahrzeugluftreifen 1 weist somit einen elektrisch leitfähigen Pfad von der Kontaktfläche zur Reifenfelge 10 bis zur Kontaktfläche des Laufstreifens 5 zur Fahrbahn auf. Die Auflage 14 hat eine Dicke 0,08 mm und erstreckt sich zusammenhängend über den gesamten Umfang des Fahrzeugluftreifens 1. Der nicht dargestellte linke Bereich des Fahrzeugluftreifens 1 kann analog gestaltet sein. Er kann aber auch keine Auflage 14 und/oder keine elektrisch leitfähige Wulstsohle 9 aufweisen.

Figur 2 zeigt die rechte Seite eines radialen Teilschnitts durch einen weiteren Fahrzeugluftreifen 1. Die Karkasse 3 weist neben einer Karkasslage 11, welche in einem äußeren Karkasshochschlag 13 unterhalb des Oberbaus endet, eine sogenannte schwimmende Karkasslage 15 auf. Diese erstreckt sich zusammenhängend zwischen der elektrisch leitfähigen Wulstsohle 9 und dem Oberbau 4 als axial äußerste Lage der Karkasse 3 und endet in den jeweiligen Bereichen. Ihre axial äußere Oberfläche ist mit einer Auflage 14 belegt, welche den Oberbau 3 und die elektrisch leitfähige Wulstsohle 14 kontaktiert und elektrisch leitfähig verbindet. Die Auflage 14 ist ein Streifen mit einer Dicke von 1 mm und einer durchschnittlichen Breite von 10 mm. Über den Umfang des Reifens sind in äquidistanten Abständen 6 solcher Streifen angeordnet.

Figur 3 zeigt einen radialen Teilschnitt durch einen Fahrzeugluftreifen 1 aufweisend eine Karkasse 3 mit einer geteilten Karkasslage, welche sich von einem Reifenwulst 2 über den Oberbau 4 zum anderen Reifenwulst 2 erstreckt und im Bereich des Oberbaus 4 in Umfangsrichtung des Fahrzeugluftreifens 1 in zwei Karkasslagenteile 16, 17 geteilt ist. Die beiden Karkasslagenteile 16, 17 überlappen im Bereich des Oberbaus 4. Das Karkasslagenteil 16 endet im Bereich des Oberbaus 4 und kontaktiert diesen im Endpunkt 18 des Karkasslagenteils 16. Der an das Karkasslagenteil 16 angrenzende Reifenwulst 2 des Fahrzeugluftreifens 1 weist eine elektrisch leitfähige Wulstsohle 9 auf. Das Karkasslagenteil 16 weist eine Auflage 14 auf, welche sich axial innen entlang des Karkasslagenteils 16 vom Bereich der elektrisch leitfähigen Wulstsohle 9 bis zum Endpunkt 18 des Karkasslagenteils 16 oder darüber hinaus erstreckt und sowohl den Oberbau 4 als auch die elektrisch leitfähige Wulstsohle 9 kontaktiert und diese elektrisch leitfähig verbindet.

Figur 4 zeigt einen weiteren radialen Teilschnitt durch einen Fahrzeugluftreifen 1. Die Karkasse 3 des Fahrzeugluftreifens weist zwei Karkasslagen 11 auf, wobei eine Karkasslage 11 eine in zwei Karkasslagenteile 16, 17 geteilte Karkasslage ist. Wie bei Figur 3 weist das Karkasslagenteil 16 eine Auflage 14 auf, welche die elektrisch leitfähige Wulstsohle 9 mit dem Oberbau 4 elektrisch leitfähig verbindet. Hierbei ist vorrangig eine Oberfläche der geteilten Karkasslage, nicht die Oberfläche der Karkasse, beauflagt.

Die in den Figuren 1 bis 4 dargestellten Ausführungsbeispiele können mittels des erfindungsgemäßen Verfahrens hergestellt werden.

### Bezugszeichenliste

- 1: Fahrzeugluftreifen
- 2: Reifenwulst
- 3: Karkasse
- 4: Oberbau
- 5: Laufstreifen
- 6: Gürtel
- 7: Innenschicht
- 8: Seitenstreifen
- 9: elektrisch leitfähige Wulstsohle
- 10: Reifenfelge
- 11: Karkasslage
- 12: Wulstkern
- 13: Karkasshochschlag
- 14: Auflage
- 15: schwimmende Karkasslage
- 16: Karkasslagenteil
- 17: Karkasslagenteil
- 18: Endpunkt
- aR: axiale Richtung
- rR: radiale Richtung

## Patentansprüche

1. Fahrzeugluftreifen (1) in Radialbauart, aufweisend einen Oberbau (4), eine Radialkarkasse (3) und zwei Reifenwülste (2) aufweisend jeweils eine Wulstsohle, wobei sich die Radialkarkasse (3) von einer Wulstsohle über den Oberbau (4) zu der anderen Wulstsohle erstreckt, wobei der Oberbau (4) und wenigstens eine Wulstsohle elektrisch leitfähig gestaltet sind, wobei die Radialkarkasse (3) elektrisch nicht leitfähig gestaltet ist und wenigstens eine Karkasslage (11) aufweist, welche aus einer in eine elektrisch nicht leitfähige Kautschukmischung eingebetteten Festigkeitsträgern besteht und deren Oberfläche eine Auflage (14) aus elektrisch leitfähigem Material aufweist,
**dadurch gekennzeichnet, dass**
- die Auflage (14) eine elektrisch leitfähige Kautschukmischung ist, dass
- sich die Karkasslage (11) von der elektrisch leitfähigen Wulstsohle (9) bis zum Oberbau (4) erstreckt, wobei die beauflagte Oberfläche der Karkasslage (11) den Oberbau (4) und die elektrisch leitfähige Wulstsohle (9) kontaktiert, dass
- sich die Auflage (14) auf der Oberfläche der Karkasslage (11) zusammenhängend von der elektrisch leitfähigen Wulstsohle (9) bis zum Oberbau (4) erstreckt, und dass
- die Auflage (14) sowohl die elektrisch leitfähige Wulstsohle (9) als auch den Oberbau (4) elektrisch kontaktiert, womit die elektrisch leitfähige Wulstsohle (9) und der Oberbau (4) elektrisch leitfähig miteinander verbunden sind.

2. Fahrzeugluftreifen (1) nach zumindest einem der vorangegangenen Ansprüche, **dadurch gekennzeichnet, dass** sich die Auflage (14) zwischen dem Oberbau (4) und der elektrisch leitfähigen Wulstsohle (9) axial außenseitig bezüglich der Radialkarkasse (3) erstreckt.

3. Fahrzeugluftreifen (1) nach zumindest einem der vorangegangenen Ansprüche, **dadurch gekennzeichnet, dass** die Karkasslage (11) im Bereich des Oberbaus (4) endet und den Oberbau (4) zumindest in ihrem Endpunkt (18) kontaktiert, dass sich die Auflage (14) zwischen der elektrisch leitfähigen Wulstsohle (9) und dem Oberbau (4) axial innen an der Karkasslage (11) erstreckt und dass sich die Auflage (14) im Bereich des Oberbaus (4) bis zum Endpunkt (18) der Karkasslage (11) oder darüber hinaus erstreckt und den Oberbau (4) als auch die elektrisch leitfähige Wulstsohle (9) kontaktiert.

4. Fahrzeugluftreifen (1) nach zumindest einem der vorangegangenen Ansprüche, **dadurch gekennzeichnet, dass** sich die Auflage (14) über den gesamten Umfang oder über mindestens einen Teilbereich des Umfangs des Fahrzeugluftreifens (1) erstreckt.

5. Fahrzeugluftreifen (1) nach zumindest einem der vorangegangenen Ansprüche, **dadurch gekennzeichnet, dass** sich die Auflage (14) über die gesamte Länge der Karkasslage (11) oder über mindestens einen Teilbereich der Länge erstreckt.

6. Fahrzeugluftreifen (1) nach zumindest einem der vorangegangenen Ansprüche, **dadurch gekennzeichnet, dass** die Dicke der Auflage (14) 0,005 mm bis 6,0 mm, insbesondere 0,01 mm bis 2,5 mm, insbesondere 0,05 mm bis 1,2 mm, beträgt.

7. Verfahren zur Herstellung eines Fahrzeugluftreifens aufweisend einen elektrisch leitfähigen Oberbau (4), zwei Wulstsohlen und eine Radialkarkasse (3), welche sich von einer Wulstsohle über den Oberbau (4) zu der anderen Wulstsohle erstreckt, wobei der Oberbau (4) und wenigstens eine Wulstsohle elektrisch leitfähig gestaltet sind, wobei die Radialkarkasse (3) elektrisch nicht leitfähig gestaltet ist, mit folgenden Schritten:
a) Herstellen der Karkasslage (11) an einem Kalander,
b) Belegen einer Oberfläche der Karkasslage (11) mit einer zusammenhängenden Auflage (14) aus einer elektrisch leitfähigen Kautschukmischung, wobei die Auflage (14) im fertiggestellten Fahrzeugluftreifen (1) eine elektrisch leitfähige Wulstsohle (9) und den elektrisch leitfähigen Oberbau (4) kontaktiert,
c) Anordnen der Karkasslage (11) mit der Auflage (14) auf einer Aufbautrommel,
d) Fertigstellen der Radialkarkasse (3),
e) Fertigstellen des Fahrzeugluftreifens (1) mit weiteren Schritten.

8. Verfahren nach Anspruch 7, **dadurch gekennzeichnet, dass** das Belegen der Karkasslage (11) mit der Auflage (14) bei Schritt b) direkt am und / oder nach dem Kalander erfolgt.

9. Verfahren nach zumindest einem der Ansprüche 7-8, **dadurch gekennzeichnet, dass** bei Schritt b) die Karkasslage (11) über ihre gesamte Breite oder über mindestens einen Teil ihrer Breite mit der Auflage (14) belegt wird.

10. Verfahren nach zumindest einem der Ansprüche 7-9, **dadurch gekennzeichnet, dass** bei Schritt b) die Karkasslage (11) über ihre gesamte Längserstreckung oder über mindestens einen Teilbereich ihrer Längserstreckung mit der Auflage (14) belegt wird.

## Claims

1. Vehicle pneumatic tire (1) of radial construction having a superstructure (4), a radial carcass (3) and two tire beads (2), each having a bead base, wherein the radial carcass (3) extends from one bead base to the other bead base via the superstructure (4), wherein the superstructure (4) and at least one bead base are of electrically conductive configuration, wherein the radial carcass (3) is of electrically nonconductive configuration and has at least one carcass ply (11), which consists of a reinforcement embedded in an electrically nonconductive rubber mixture and the surface of which has an overlay (14) composed of electrically conductive material,
**characterized in that**
- the overlay (14) is an electrically conductive rubber mixture, **in that**
- the carcass ply (11) extends from the electrically conductive bead base (9) to the superstructure (4), wherein the overlaid surface of the carcass ply (11) makes contact with the superstructure (4) and the electrically conductive bead base (9), **in that**
- the overlay (14) extends continuously on the surface of the carcass ply (11) from the electrically conductive bead base (9) to the superstructure (4), and **in that**
- the overlay (14) makes electrical contact both with the electrically conductive bead base (9) and with the superstructure (4), with the result that the electrically conductive bead base (9) and the superstructure (4) are connected to one another in an electrically conductive manner.

2. Vehicle pneumatic tire (1) according to at least one of the preceding claims, **characterized in that** the overlay (14) extends axially on the outside in relation to the carcass (3), between the superstructure (4) and the electrically conductive bead base (9).

3. Vehicle pneumatic tire (1) according to at least one of the preceding claims, **characterized in that** the carcass ply (11) ends in the region of the superstructure (4) and makes contact with the superstructure (4) at least at its endpoint (18), **in that** the overlay (14) extends axially on the inside on the carcass ply (11), between the electrically conductive bead base (9) and the superstructure (4), and **in that**, in the region of the superstructure (4), the overlay (14) extends as far as the endpoint (18) of the carcass ply (11) or beyond and makes contact with the superstructure (4) and also with the electrically conductive bead base (9).

4. Vehicle pneumatic tire (1) according to at least one of the preceding claims, **characterized in that** the overlay (14) extends over the entire circumference or over at least a partial region of the circumference of the vehicle pneumatic tire (1).

5. Vehicle pneumatic tire (1) according to at least one of the preceding claims, **characterized in that** the overlay (14) extends over the entire length of the carcass ply (11) or over at least a partial region of the length.

6. Vehicle pneumatic tire (1) according to at least one of the preceding claims, **characterized in that** the thickness of the overlay (14) is 0.005 mm to 6.0 mm, in particular 0.01 mm to 2.5 mm, in particular 0.05 mm to 1.2 mm.

7. Method for producing a vehicle pneumatic tire having an electrically conductive superstructure (4), two bead bases and a radial carcass (3), which extends from one bead base to the other bead base via the superstructure (4), wherein the superstructure (4) and at least one bead base are of electrically conductive configuration, wherein the radial carcass (3) is of electrically nonconductive configuration, comprising the following steps:
a) producing the carcass ply (11) on a calender,
b) covering a surface of the carcass ply (11) with a continuous overlay (14) composed of an electrically conductive rubber mixture, wherein the overlay (14) in the finished vehicle pneumatic tire (1) makes contact with an electrically conductive bead base (9) and the electrically conductive superstructure (4),
c) arranging the carcass ply (11) with the overlay (14) on a tire building drum,
d) finishing the radial carcass (3),
e) finishing the vehicle pneumatic tire (1) by means of further steps.

8. Method according to Claim 7, **characterized in that** the covering of the carcass ply (11) with the overlay (14) in step b) takes place directly on and/or after the calender.

9. Method according to at least one of Claims 7-8, **characterized in that** the carcass ply (11) is covered with the overlay (14) over its entire width or over at least part of its width in step b).

10. Method according to at least one of Claims 7-9, **characterized in that** the carcass ply (11) is covered with the overlay (14) over its entire longitudinal extent or over at least a partial region of its longitudinal extent in step b).

## Revendications

1. Pneumatique de véhicule (1) de construction radiale, présentant une structure supérieure (4), une carcasse radiale (3) et deux talons de pneu (2) présentant chacun une semelle de talon, la carcasse radiale (3) s'étendant depuis une semelle de talon par le biais de la structure supérieure (4) jusqu'à l'autre semelle de talon, la structure supérieure (4) et au moins une semelle de talon étant configurées de manière à être électriquement conductrices, la carcasse radiale (3) étant configurée de manière à ne pas être électriquement conductrice et présentant au moins une couche de carcasse (11) qui se compose d'un renfort noyé dans un mélange de caoutchouc non électriquement conducteur et dont la surface présente un revêtement (14) en matériau électriquement conducteur,
**caractérisé en ce que**
- le revêtement (14) est un mélange de caoutchouc électriquement conducteur,
- la couche de carcasse (11) s'étend depuis la semelle de talon (9) électriquement conductrice jusqu'à la structure supérieure (4), la surface de la couche de carcasse (11) munie du revêtement venant en contact avec la structure supérieure (4) et la semelle de talon (9) électriquement conductrice,
- le revêtement (14) s'étend sur la surface de la couche de carcasse (11) de manière continue depuis la semelle de talon (9) électriquement conductrice jusqu'à la structure supérieure (4), et
- le revêtement (14) vient en contact électrique à la fois avec la semelle de talon (9) électriquement conductrice et avec la structure supérieure (4) de sorte que la semelle de talon (9) électriquement conductrice et la structure supérieure (4) soient connectées de manière électriquement conductrice l'une à l'autre.

2. Pneumatique de véhicule (1) selon au moins l'une des revendications précédentes, **caractérisé en ce que** le revêtement (14) entre la structure supérieure (4) et la semelle de talon (9) électriquement conductrice s'étend axialement du côté extérieur par rapport à la carcasse radiale (3) .

3. Pneumatique de véhicule (1) selon au moins l'une quelconque des revendications précédentes, **caractérisé en ce que** la couche de carcasse (11) se termine dans la région de la structure supérieure (4) et vient en contact avec la structure supérieure (4) au moins au niveau de son point d'extrémité (18), **en ce que** le revêtement (14) entre la semelle de talon (9) électriquement conductrice et la structure supérieure (4) s'étend axialement à l'intérieur au niveau de la couche de carcasse (11) et **en ce que** le revêtement (14) dans la région de la structure supérieure (4) s'étend jusqu'au point d'extrémité (18) de la couche de carcasse (11) ou au-delà de celui-ci et vient en contact avec la structure supérieure (4) ainsi qu'avec la semelle de talon (9) électriquement conductrice.

4. Pneumatique de véhicule (1) selon au moins l'une quelconque des revendications précédentes, **caractérisé en ce que** le revêtement (14) s'étend sur toute la périphérie ou sur au moins une région partielle de la périphérie du pneumatique de véhicule (1).

5. Pneumatique de véhicule (1) selon au moins l'une quelconque des revendications précédentes, **caractérisé en ce que** le revêtement (14) s'étend sur toute la longueur de la couche de carcasse (11) ou sur au moins une région partielle de la longueur.

6. Pneumatique de véhicule (1) selon au moins l'une quelconque des revendications précédentes, **caractérisé en ce que** l'épaisseur du revêtement (14) est de 0,005 mm à 6,0 mm, notamment de 0,01 mm à 2,5 mm, en particulier de 0,05 mm à 1,2 mm.

7. Procédé de fabrication d'un pneumatique de véhicule présentant une structure supérieure (4) électriquement conductrice, deux semelles de talon et une carcasse radiale (3) qui s'étend depuis une semelle de talon par le biais de la structure supérieure (4) jusqu'à l'autre semelle de talon, la structure supérieure (4) et au moins une semelle de talon étant configurées de manière à être électriquement conductrices, la carcasse radiale (3) étant configurée de manière à ne pas être électriquement conductrice, comprenant les étapes suivantes :
a) fabrication de la couche de carcasse (11) sur une calandre,
b) garniture d'une surface de la couche de carcasse (11) avec un revêtement cohésif (14) constitué d'un mélange de caoutchouc électriquement conducteur, le revêtement (14), dans le pneumatique de véhicule fini (1), venant en contact avec une semelle de talon (9) électriquement conductrice et avec la structure supérieure (4) électriquement conductrice,
c) disposition de la couche de carcasse (11) avec le revêtement (14) sur un tambour de construction,
d) finition de la carcasse radiale (3),
e) finition du pneumatique de véhicule (1) avec des étapes supplémentaires.

8. Procédé selon la revendication 7, **caractérisé en ce que** la garniture de la couche de carcasse (11) avec le revêtement (14) à l'étape b) s'effectue directement au niveau de et/ou après la calandre.

9. Procédé selon au moins l'une quelconque des revendications 7 et 8, **caractérisé en ce qu'**à l'étape b), la couche de carcasse (11) est garnie sur toute sa largeur ou sur au moins une partie de sa largeur avec le revêtement (14).

10. Procédé selon au moins l'une quelconque des revendications 7 à 9, **caractérisé en ce qu'**à l'étape b), la couche de carcasse (11) est garnie sur toute son étendue longitudinale ou sur au moins une région partielle de son étendue longitudinale avec le revêtement (14).
